# EUROPÄISCHE PATENTSCHRIFT

(11) **EP 0 807 518 B1**
(45) Veröffentlichungstag und Bekanntmachung des Hinweises auf die Patenterteilung: **09.04.2003**
(21) Anmeldenummer: 97107489.3
(22) Anmeldetag: 07.05.1997
(51) Int. Cl.: B32B 15/08, B32B 31/12, E04C 2/292

(54) **Verfahren zur kontinuierlichen Herstellung von feuerbeständigen wärmeisolierenden Bauplatten in Sandwichbauweise**
A method for the continuous manufacturing of fire-resistant sandwich panels
Procédé pour la fabrication en continu de panneaux sandwich de construction résistants au feu

(30) Priorität: 13.05.1996 DE 19619063
(43) Veröffentlichungstag der Anmeldung: 19.11.1997
(73) Patentinhaber: ThyssenKrupp Stahl AG, 47166 Duisburg (DE)
(72) Erfinder: Brüggenthies, Paul, Dipl.-Ing., 59069 Hamm (DE)

(56) Entgegenhaltungen:
- EP-A- 0 643 179
- BE-A- 656 956
- DE-A- 1 609 668
- DE-A- 2 304 886
- FR-A- 2 013 153
- GB-A- 2 259 887
- US-A- 2 710 081

## Beschreibung

Die Erfindung bezieht sich auf ein Verfahren zur kontinuierlichen Herstellung von feuerbeständigen wärmeisolierenden Bauplatten in Sandwichbauweise, bei dem ein unteres und ein oberes Stahlband als Außenschichten und ein wärmeisolierender Füllstoff als Mittelschicht miteinander zu einem Sandwichstrang verklebt werden, von dem quer zu seiner Bewegungsrichtung einzelne Bauplatten abgetrennt werden.

Durch die DE-OS 38 24 842 ist bereits ein Verfahren zur kontinuierlichen Herstellung von feuerbeständigen wärmeisolierenden Bauplatten bekannt, bei dem zwei fertigprofilierte Stahlbänder als Außenschichten und ein wärmeisolierender Füllstoff als Mittelschicht miteinander zu einem Sandwichstrang verklebt werden.

Bei der kontinuierlichen Herstellung von feuerbeständigen wärmeisolierenden Bauplatten mit einer Nut- und einer Federseite führt jedoch der Einsatz von zwei fertigprofilierten Stahlbändern als Außenschichten zu einer nicht einwandfreien Füllstoffeinlage in dem Nut- und dem Federbereich mit der Folge, daß zusammengefügte Bauplatten in ihrem Stoßbereich einen ungünstigen Feuerwiderstand aufweisen.

Der Erfindung liegt die Aufgabe zugrunde, ein Verfahren zur kontinuierlichen Herstellung von feuerbeständigen wärmeisolierenden Bauplatten mit einer Nut- und einer Federseite anzugeben, die im zusammengefügten Zustand in ihrem Stoßbereich einen günstigeren Feuerwiderstand gewährleisten.

Erfindungsgemäß wird diese Aufgabe bei dem eingangs genannten Verfahren dadurch gelöst, daß zur kontinuierlichen Herstellung von Bauplatten mit einer Nut- und einer Federseite das untere Stahlband an seinem der Nutseite zugeordneten Rand vorprofiliert und an seinem der Federseite zugeordneten Rand fertigprofiliert wird, während das obere Stahlband an seinen beiden Rändern vorprofiliert wird, daß anschließend auf die Innenfläche des unteren Stahlbandes eine Klebstoffschicht aufgesprüht wird, auf die seitenprofilierte Füllstoff-Formplatten stoßförmig hintereinander aufgelegt werden, daß hiernach auf die obere Mantelfläche der Füllstoff-Formplatten in dem Bereich der vorgesehenen Vereinigung mit der Innenfläche des oberen Stahlbandes eine Klebstoffschicht aufgesprüht und darauf das obere Stahlband aufgebracht wird und daß der vorprofilierte Rand des unteren Stahlbandes und die beiden vorprofilierten Ränder des oberen Stahlbandes entsprechend der seitenprofilierten Füllstoff-Formplatten fertigprofiliert werden.

Vorzugsweise werden der vorprofilierte Rand des unteren Stahlbandes und die beiden vorprofilierten Ränder des oberen Stahlbandes jeweils an einer Biegekante geschwächt.

Nach dem Fertigprofilieren des vorprofilierten Randes des unteren Stahlbandes und der beiden Ränder des oberen Stahlbandes wird ein nicht brennbares Dichtband in eine der Federseite zugeordnete Nut der Füllstoff-Formplatten eingeklebt.

Im folgenden wird die Erfindung anhand einer schematischen Zeichnung beschrieben.

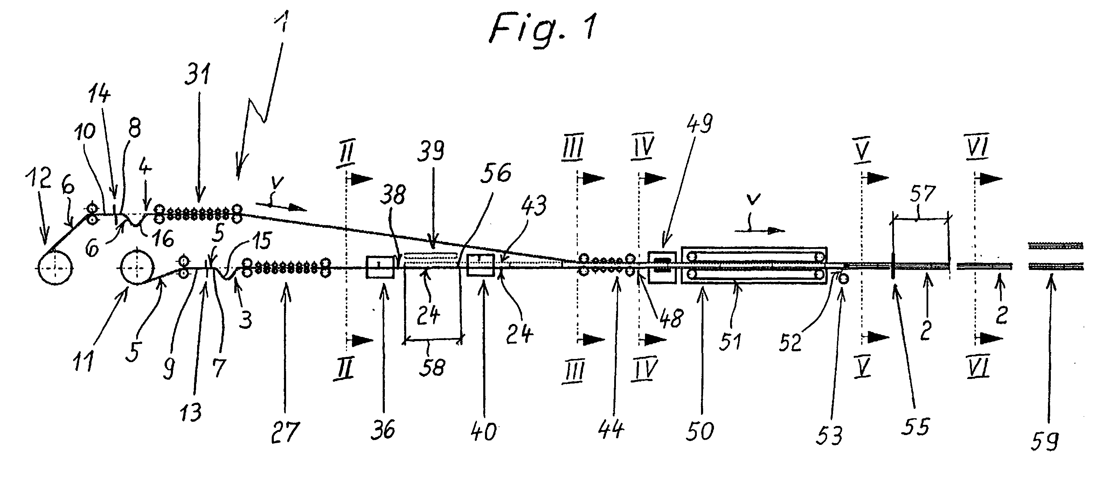

Es zeigt
- Fig. 1: eine Anlage zur Herstellung von feuerbeständigen wärmeisolierenden Bauplatten mit einer Nut- und einer Federseite als Ausführungsbeispiel in Ansicht,

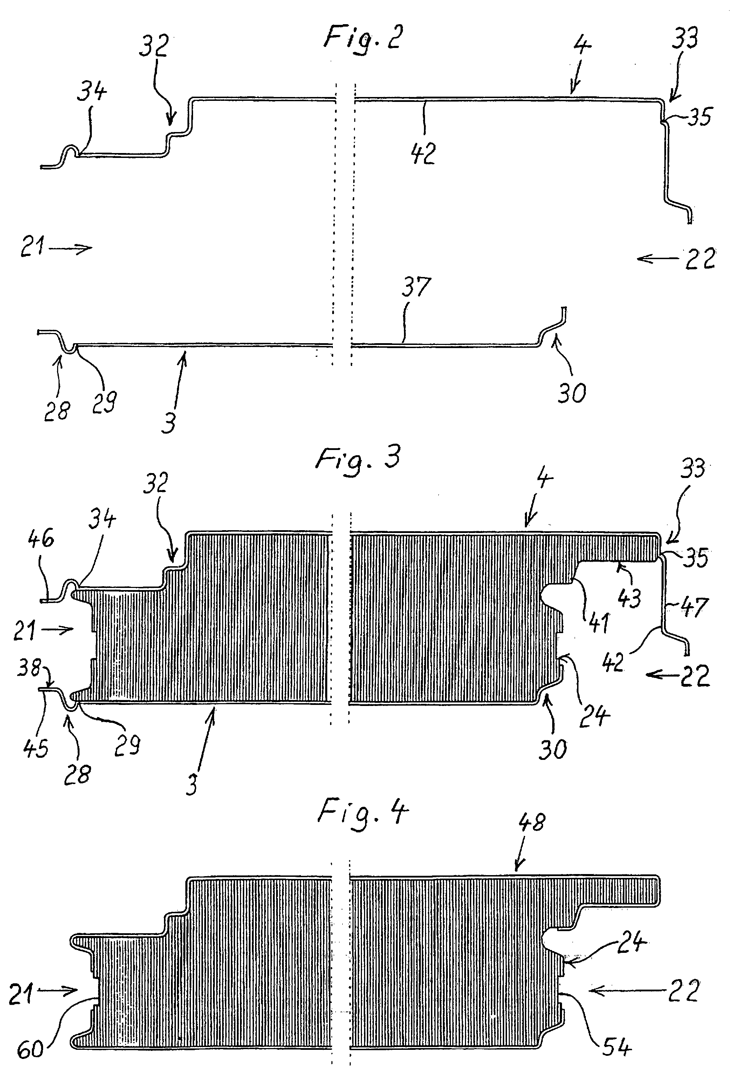

- Fig. 2: zwei Teilschnitte durch ein unteres und ein oberes Stahlband entsprechend der Linie II - II in Fig. 1 in vergrößertem Maßstab, wobei das untere Stahlband an seinem der Federseite zugeordneten Rand vorprofiliert und an einer Biegekante geschwächt sowie an seinem der Nutseite zugeordneten Rand fertigprofiliert ist und wobei das obere Stahlband an seinen beiden Rändern vorprofiliert und jeweils an einer Biegekante geschwächt ist,
- Fig. 3: zwei Teilschnitte durch das untere und das obere Stahlband, eine seitenprofilierte Füllstoff-Formplatte und zwei Klebstoffschichten entsprechend der Linie III - III in Fig. 1 in vergrößertem Maßstab in der Phase vor dem Fertigprofilieren des vorprofilierten Randes des unteren Stahlbandes und der beiden vorprofilierten Ränder des oberen Stahlbandes;
- Fig. 4: zwei Teilschnitte durch das untere und das obere Stahlband, eine seitenprofilierte Füllstoff-Formplatte und zwei Klebstoffschichten entsprechend der Linie IV - IV in Fig. 1 in vergrößertem Maßstab in der Phase nach dem Fertigprofilieren des vorprofilierten Randes des unteren Stahlbandes und der beiden vorprofilierten Ränder des oberen Stahlbandes,

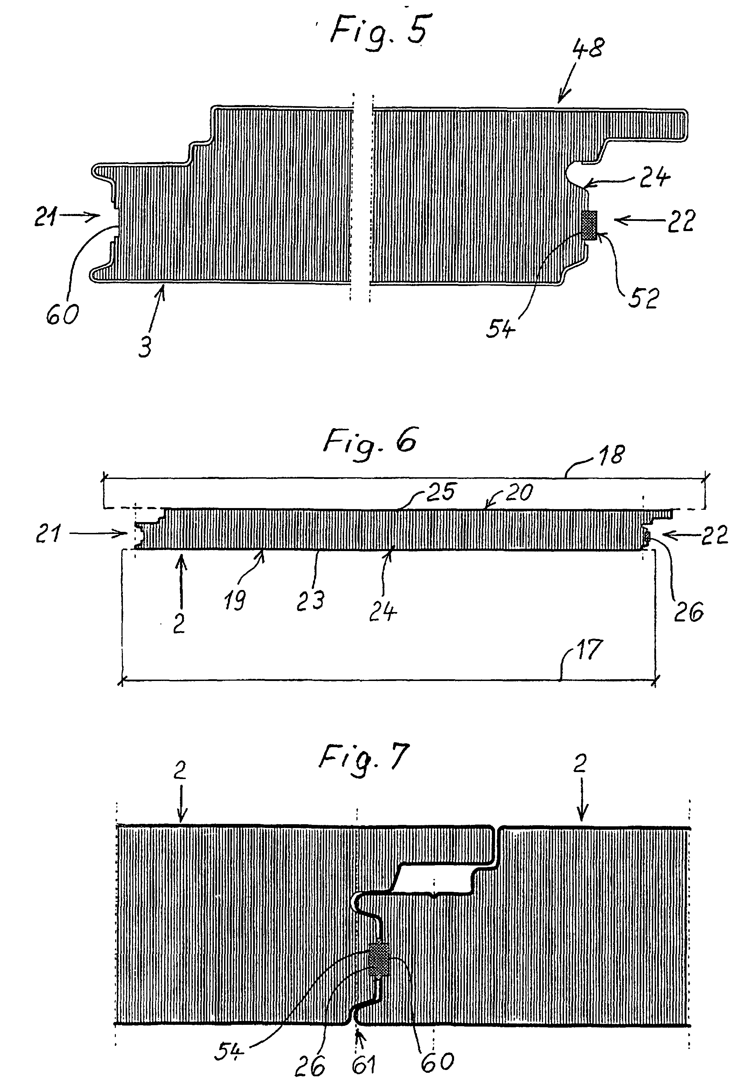

- Fig. 5: zwei Teilschnitte durch das untere und das obere Stahlband, eine seitenprofilierte Füllstoff-Formplatte und zwei Klebstoffschichten mit einem Schnitt durch ein an die seitenprofilierte Füllstoff-Formplatte angeklebtes Dichtband entsprechend der Linie V - V in Fig. 1 in vergrößertem Maßstab,
- Fig. 6: einen Schnitt durch eine Bauplatte entsprechend der Linie VI - VI in Fig. 1 in vergrößertem Maßstab,
- Fig. 7: einen Teilschnitt durch zwei zusammengefügte Bauplatten nach Fig. 6 in vergrößertem Maßstab.

In einer Anlage 1 zur kontinuierlichen Herstellung von feuerbeständigen wärmeisolierenden Bauplatten 2 in Sandwichbauweise werden ein unteres (3) und ein oberes Stahlband 4 als Außenschichten mit gleicher Geschwindigkeit v in Bandlängsrichtung bewegt.

Sowohl das untere (3) als auch das obere Stahlband 4 entsteht durch Verbinden von Einzelbändern 5, 6 jeweils an dem Bindende 7, 8 mit dem Bandanfang 9, 10.

Die Einzelbänder 5, 6 werden jeweils von einer Bandabhaspelstation 11, 12 zu einer Bandschopf- und -verbindungsstation 13, 14 geführt. Zwei Bandschlingen 15, 16 dienen der Speicherung des unteren (3) und des oberen Stahlbandes 4.

Das untere (3) und das obere Stahlband 4 weisen je eine Barndbreite 17, 18 auf, die sich aus der Abwicklungslänge einer unteren (19) und einer oberen Außenschale 20 einer Bauplatte 2 ergibt (Fig. 6).

Jede Bauplatte 2, die eine Nut- (21) und eine Federseite 22 hat, ist ein fünfschichtiges Sandwichelement, wobei die untere Außenschale 19, eine Klebstoffschicht 23, eine seitenprofilierte Füllstoff-Formplatte 24 aus Mineralwolle, eine Klebstoffschicht 25 und die obere Außenschale 20 übereinanderliegen. An der Federseite 22 einer jeden Bauplatte 2 ist ein nicht brennbarer Dichtstreifen 26 angeklebt.

Der in Fig. 6 dargestellte Querschnitt einer Bauplatte 2 ist maßgebend für die Profilierung des unteren (3) und des oberen Stahlbandes 4.

In einer Bandprofilierstation 27 wird das untere Stahlband 3 an seinem der Nutseite 21 zugeordneten Rand 28 vorprofiliert und an einer Biegekante 29 geschwächt sowie an seinem der Federseite 22 zugeordneten Rand 30 fertigprofiliert (Fig. 2).

Gleichzeitig wird in einer Bandprofilierstation 31 das obere Stahlband 4 an seinen beiden Rändern 32, 33 vorprofiliert und jeweils an einer Biegekante 34, 35 geschwächt (Fig. 2).

Von der Bandprofilierstation 27 aus gelangt das untere Stahlband 3 in eine Klebstoff-Sprühstation 36, die auf die Innenfläche 37 des unteren Stahlbandes 3 eine Klebstoffschicht 38 aufsprüht.

Anschließend werden auf das mit der Klebstoffschicht 38 versehene untere Stahlband 3 seitenprofilierte Füllstoff-Formplatten 24 stoßförmig hintereinander aufgelegt, und zwar mit Hilfe einer Beschickeinrichtung 39. Dabei wird der fertigprofilierte Rand 30 des unteren Stahlbandes 3 als Seitenanschlag benutzt.

Danach wird in einer Klebstoff-Sprühstation 40 die obere Mantelfläche 41 der Füllstoff-Formplatten 24 in dem Bereich der vorgesehenen Vereinigung mit der Innenfläche 42 des oberen Stahlbandes 4 eine Klebstoffschicht 43 aufgesprüht.

Sodann wird in einer Bandprofilierstation 44 zunächst das an seinen beiden Rändern 32, 33 vorprofilierte obere Stahlband 4 auf die mit der Klebstoffschicht 43 versehenen Füllstoff-Formplatten 24 gedrückt (Fig. 3).

In der Bandprofilierstation 44 werden ferner der vorprofilierte Rand 28 des unteren Stahlbandes 3 und die beiden vorprofilierten Ränder 32, 33 des oberen Stahlbandes 4 entsprechend der seitenprofilierten Füllstoff-Formplatten 24 fertigprofiliert (Fig. 4).

Das Fertigprofilieren der Ränder 28, 32, 33 ist hier durch rechtwinkliges Umbiegen der Randschenkel 45, 46, 47 an den Biegekanten 29, 34, 35 ausgeführt worden.

Aus der Bandprofilierstation 44 tritt ein Sandwichstrang 48 mit der Geschwindigkeit v heraus, der nacheinander eine Heizstation 49 und eine Aushärtestation 50 zum Aushärten der Klebstoffschichten 38, 43 durchläuft.

Die Aushärtestation 50 besitzt einen Doppelbandantrieb 51 zur Erzeugung der Vorschubbewegung des Sandwichstranges 48 mit der Geschwindigkeit v.

An den aus der Aushärtestation 50 austretenden Sandwichstrang 48 wird auf der Federseite 22 ein nicht brennbares Dichtband 52 mit Hilfe einer Anklebevorrichtung 53 in eine Nut 54 der Füllstoff-Formplatten 24 eingeklebt.

Eine Abtrenneinrichtung 55 trennt von dem mit dem Dichtband 52 verbundenen Sandwichstrang 48 einzelne Bauplatten 2 rechtwinklig zu der Nut- (21) und der Federseite 22 ab.

Das Abtrennen einer Bauplatte 2 von dem Sandwichstrang 48 erfolgt stets an der Stoßstelle 56 zweier Füllstoff-Formplatten 24.

Die Länge 57 einer Bauplatte 2 ist somit gleich der Länge 58 einer Füllstoff-Formplatte 24 abzüglich der beim Durchtrennen des Sandwichstranges 48 entstehenden Trennfugenbreite.

Der Abtrenneinrichtung 55 ist eine Einrichtung 59 zum Abstapeln einzelner Bauplatten 2 nachgeordnet.

Die Füllstoff-Formplatte 24 hat auf der Nutseite 21 eine Nut 60, die der teilweisen Aufnahme des Dichtstreifens 26 bei zwei zusammengefügten Bauplatten 2 dient (Fig. 7).

Der Stoßbereich zweier Bauplatten 2 ist mit 61 bezeichnet (Fig. 7).

### Bezugszeichenliste

- 1: Anlage
- 2: Bauplatte
- 3: unteres Stahlband
- 4: oberes "
- 5: Einzelband
- 6: "
- 7: Bandende
- 8: "
- 9: Bandanfang
- 10: "
- 11: Bandabhaspelstation
- 12: "
- 13: Bandschopf- und -verbindungstation
- 14: " " "
- 15: Bandschlinge
- 16: "
- 17: Bandbreite
- 18: "
- 19: untere Außenschale
- 20: obere "
- 21: Nutseite
- 22: Federseite
- 23: Klebstoffschicht
- 24: Füllstoff-Formplatte
- 25: Klebstoffschicht
- 26: Dichtstreifen
- 27: Bandprofilierstation
- 28: Rand
- 29: Biegekante
- 30: Rand
- 31: Bandprofilierstation
- 32: Rand
- 33: "
- 34: Biegekante
- 35: "
- 36: Klebstoff-Sprühstation
- 37: Innenfläche
- 38: Klebstoffschicht
- 39: Beschickeinrichtung
- 40: Klebstoff-Sprühstation
- 41: Mantelfläche
- 42: Innenfläche
- 43: Klebstoffschicht
- 44: Bandprofilierstation
- 45: Randschenkel
- 46: "
- 47: "
- 48: Sandwichstrang
- 49: Heizstation
- 50: Aushärtestation
- 51: Doppelbandantrieb
- 52: Dichtband
- 53: Anklebevorrichtung
- 54: Nut
- 55: Abtrenneinrichtung
- 56: Stoßstelle
- 57: Länge
- 58: "
- 59: Einrichtung zum Abstapeln
- 60: Nut
- 61: Stoßbereich
- v: Geschwindigkeit

## Patentansprüche

1. Verfahren zur kontinuierlichen Herstellung von feuerbeständige wärmeisolierenden Bauplatten in Sandwichbauweise, bei dem ein unteres und ein oberes Stahlband als Außenschichten und ein wärmeisolierender Füllstoff als Mittelschicht miteinander zu einem Sandwichstrang verklebt werden, von dem quer zu seiner Bewegungsrichtung einzelne Bauplatten abgetrennt werden, **dadurch gekennzeichnet, daß** zur Herstellung von Bauplatten (2) mit einer Nut- (21) und einer Federseite (22) das untere Stahl band (3) an seinem der Nutseite (21) zugeordneten Rand (28) vorprofiliert und an seinem der Federseite (22) zugeordneten Rand (30) fertigprofiliert wird, während das obere Stahlband (4) an seinen beiden Rändern (32, 33) vorprofiliert wird, daß anschließend auf die Innenfläche (37) des unteren Stahlbandes (3) eine Klebstoffschicht (38) aufgesprüht wird, auf die seitenprofilierte Füllstoff-Formplatten (24) stoßförmig hintereinander aufgelegt werden, daß hiernach auf die obere Mantelfläche (41) der Füllstoff-Formplatten (24) in dem Bereich der vorgesehenen Vereinigung mit der Innenfläche (42) des oberen Stahlbandes (4) eine Klebstoffschicht (43) aufgesprüht und darauf das obere Stahlband (4) aufgebracht wird und daß der vorprofilierte Rand (28) des unteren Stahlbandes (3) und die beiden vorprofilierten Ränder (32, 33) des oberen Stahlbandes (4) entsprechend der seitenprofilierten Füllstoff-Formplatten (24) fertigprofiliert werden.

2. Verfahren nach Anspruch 1, **dadurch gekennzeichnet, daß** der vorprofilierte Rand (28) des unteren Stahlbandes (3) und die beiden vorprofilierten Ränder (32, 33) des oberen Stahlbandes (4) jeweils an einer Biegekante (29, 34, 35) geschwächt werden.

3. Verfahren nach Anspruch 1, **dadurch gekennzeichnet, daß** nach dem Fertigprofilieren des vorprofilierten Randes (28) des unteren Stahlbandes (3) und der beiden vorprofilierten Ränder (32, 33) des oberen Stahlbandes (4) ein nicht brennbares Dichtband (52) in eine der Federseite (22) zugeordnete Nut (54) der Füllstoff-Formplatten (24) eingeklebt wird.

## Claims

1. Process for the continuous production of fireproof heat insulating sandwich panels, in which a top and a bottom steel strip as outer layers and a heat insulating filling material as medial layer are glued together to form a sandwich strip, off which individual panels are cut at right angles to the moving sense of the strip, **characterized in that** for the production of structural panels (2) with a groove side (21) and a tongue side (22) the bottom steel strip (3) is preprofiled on its edge (28) assigned to the groove side (21) and is finish-profiled on its edge (30) assigned to the tongue side (22), whereas the top steel strip (4) is preprofiled on both of its edges (32, 33), and **in that** a glue layer (38) is then sprayed onto the inner surface (37) of the bottom steel strip (3), on which filling material panels (24) with profiled sides are placed butt to butt one behind the other, and **in that** a glue layer (43) is then sprayed onto the top surface (41) of the filling material panels (24) in the area of the intended joining with the inner surface (42) of the top steel strip (4), on which the top steel strip (4) is placed, and **in that** the preprofiled edge (28) of the bottom steel strip (3) and the two preprofiled edges (32, 33) of the top steel strip (4) are finish-profiled to suit the side-profiled filling material panels (24).

2. Process according to claim 1 **characterized in that** the preprofiled edge (28) of the bottom steel strip (3) and the two preprofiled edges (32, 33) of the top steel strip (4) are weakened at a bending edge (29, 34, 35).

3. Process according to claim 1 **characterized in that** an uninflammable sealing tape (52) is glued into a groove (54) of the filling material panels (24) assigned to the tongue side (22) after the finish-profiling of the preprofiled edge (28) of the bottom steel strip (3) and the two preprofiled edges (32, 33) of the top steel strip (4).

## Revendications

1. Procédé pour la fabrication en continu de panneaux de construction réfractaires, isolants, à structure en sandwich, dans lequel un feuillard d'acier inférieur et un feuillard d'acier supérieur, en tant que couches extérieures, et une matière de remplissage isolante, en tant que couche centrale, sont collés ensemble pour former une pièce continue, en sandwich, dans laquelle des panneaux de construction individuels sont découpés dans le sens transversal par rapport à son sens de déplacement,
**caractérisé en ce que**, pour la fabrication de panneaux de construction (2) avec un côté à rainure (21) et un côté à languette (22), le feuillard d'acier inférieur (3) est pré-profilé, à son bord (28) associé au côté à rainure (21), et est profilé de manière finale à son bord (30) associé au côté à languette (22), tandis que le feuillard d'acier supérieur (4) est pré-profilé à ses deux bords (32, 33), **en ce qu'**une couche d'adhésif (38) est ensuite pulvérisée sur la surface interne (37) du feuillard d'acier inférieur (3), couche sur laquelle sont disposées bout à bout, les unes derrière les autres, des plaques moulées (24) en matière de remplissage, profilées latéralement, **en ce que**, ceci fait, une couche d'adhésif est pulvérisée sur la face supérieure (41) de la plaque de matière de remplissage (24), dans la zone prévue pour l'assemblage avec la surface interne (42) du feuillard d'acier supérieur (4), et **en ce que** le feuillard d'acier supérieur (4) est appliqué sur ladite couche d'adhésif, et **en ce que** le bord pré-profilé (28) du feuillard d'acier inférieur (3) et les deux bords pré-profilés (32, 33) du feuillard d'acier supérieur (4) reçoivent leur profil final correspondant aux plaques moulées profilées latéralement (24).

2. Procédé selon la revendication 1, **caractérisé en ce que** le bord pré-profilé (28) du feuillard d'acier inférieur (3), et les deux bords pré-profilés (32, 33) du feuillard d'acier supérieur (4) sont chacun affaiblis à l'endroit d'un bord de pliage (29, 34, 35)

3. Procédé selon la revendication 1, **caractérisé en ce que**, après le profilage final des bords pré-profilés (28) du feuillard d'acier inférieur (3) et des deux bords pré-profilés (32, 33) du feuillard d'acier supérieur (4), une bande d'étanchéité incombustible (52) est collée dans une rainure (54), associée au côté à languette (22), des plaques moulées en matière de remplissage (24).
